# FASCICULE DE BREVET EUROPEEN

(11) **EP 0 857 609 B1**
(45) Date de publication et mention de la délivrance du brevet: **02.01.2002**
(21) Numéro de dépôt: 98400255.0
(22) Date de dépôt: 05.02.1998
(51) Int. Cl.: B60Q 1/068, F16B 21/07, F16C 11/06

(54) **Capsule pour le montage amorti d'un miroir dans un boîtier de projecteur de véhicule automobile**
Kapsel mit Dämpfervorrichtung zur Montage eines Spiegels in Automobilscheinwerfergehäuse
Capsule with damping device for mounting a mirror in a vehicle headlamp housing

(30) Priorité: 05.02.1997 FR 9701284
(43) Date de publication de la demande: 12.08.1998
(73) Titulaire: VALEO VISION, 93000 Bobigny (FR)
(72) Inventeur: Kesteleyn, Marc, 94000 Creteil (FR); Cambier, Frédérik, 94000 Creteil (FR); Salmon, Jean, 94000 Creteil (FR)
(74) Mandataire: Martin, Jean-Jacques

(56) Documents cités:
- EP-A- 0 572 313

## Description

La présente invention concerne de façon générale les projecteurs de véhicules automobiles, et plus particuilièrement une nouvelle capsule de montage d'un miroir dans un boîtier de projecteur.

Généralement, un miroir de projecteur est fixé sur un ensemble de têtes sphériques, coniques ou encore tronconiques par l'intermédiaire de capsules en matière plastique solidaires de la face arrière du miroir. Les têtes constituent les extrémités soit de tiges fixes montées sur le boîtier du projecteur, soit de tiges mobiles essentiellement en translation afin d'effectuer un réglage du faisceau en site ou en azimut.

De telles capsules comprennent de manière classique une cavité ouverte de forme essentiellement complémentaire à celle de la tête associée constituant un siège dans lequel ladite tête est engagée à force ou "cloquée". Il peut être prévu au voisinage de l'ouverture de ladite cavité, des pattes d'encliquetage aptes à se déformer élastiquement pour permettre la mise en place de la tête dans la cavité et après cette mise en place faire obstacle à l'extraction de la tête hors de la cavité.

Un tel agencement décrit notamment dans le document EP - 572 313 appartenant à la Demanderesse, permet une mise en place univoque de la tête dans la capsule de montage.

Toutefois, cette solution présente comme inconvénient principal, le fait que la fabrication du miroir et de la capsule nécessitent l'utilisation de moules à tiroir complexes, coûteux et allongant les cycles du moulage, et allant même jusqu'à nécessiter après le moulage de ces pièces une reprise d'usinage pour la finition.

En outre, lorsqu'un projecteur est soumis à de fortes sollicitations mécaniques dues à des conditions d'utilisation dures et intensives, ce qui est le cas par exemple des projecteurs de camions, des véhicules tout terrain ou encore des véhicules de chantier, le boîtier a tendance à vibrer et à transmettre de façon indésirable ces vibrations au miroir, ce qui peut provoquer pour de grandes amplitudes de vibrations, un scintillement et/ou une déformation du faisceau émis par le projecteur, une fragilisation du miroir allant parfois même jusqu'à sa rupture, ct une usure rapide des fixations du miroir sur le boitier.

On connaît du document FR - 2 724 349 appartenant à la Demanderesse, une capsule pour le montage de l'extrémité d'une tige sur l'arrière d'un miroir de projecteur de véhicule automobile qui consiste en un manchon en matière souple et compressible apte à être engagé dans un fourreau généralement lisse, solidaire du miroir et à recevoir à force dans un passage central ladite extrémité de la tige, celle-ci comprimant le matériau du manchon entre elle et ledit fourreau pour assurer la tenue de ladite extrémité.

Bien que le manchon en matière plastique souple et compressible constituant ladite capsule participe à atténuer la transmission des vibrations du boîtier au miroir, il ne permet pas de positionner de manière univoque la tête de la tige à l'intérieur de la capsule.

En conséquence, l'invention propose une nouvelle capsule pour le montage d'une extrémité d'une tige sur l'arrière d'un miroir de projecteur de véhicule automobile du type de celle précitée, qui permet de positionner de manière déterminée la tête de la tige à l'intérieur de la capsule tout en assurant une bonne absorption des vibrations du boîtier de manière à atténuer la transmission desdites vibrations au miroir.

Plus particulièrement, selon l'invention, il est prévu dans la paroi latérale du fourreau au moins un dégagement dans lequel le matériau du manchon s'engage lorsque celui-ci est comprimé par l'extrémité de la tige afin d'assurer la retenue de ladite extrémité.

Ainsi, le dégagement prévu dans la paroi latérale du fourreau assure le positionnement de manière déterminée de l'extrémité de la tige dans celui-ci et le manchon en matière souple permet l'absorption de la majorité des vibrations du boîtier transmises via ladite tige au miroir.

Selon un mode de réalisation, il est prévu deux dégagements positionnés en regard l'un de l'autre.

De manière avantageuse, chaque dégagement est orienté selon un axe D qui s'étend dans un plan perpendiculaire P à l'axe X du fourreau en formant un angle d'environ 45 degré avec les axes orthogonaux Y, Z définissant ledit plan P.

Selon un mode de réalisation préférentiel, chaque dégagement consiste en une ouverture circulaire d'axe X, formée dans la paroi latérale du fourreau.

Le manchon peut être réalisé en un matériau du type caoutchouc, élastomère ou mousse.

L'invention propose également un projecteur de véhicule automobile, du type comportant un miroir portant une lampe et monté sur une pluralité de tiges elles-mêmes montées sur un boîtier de projecteur, dans lequel il est prévu des capsules telles que définies ci-dessus, solidaires de la partie arrière du miroir pour son montage sur les extrémités respectives desdites tiges.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective du fourreau de la capsule conforme à la présente invention,
- la figure 2 est une vue selon la flèche F de la capsule représentée sur la figure 1,
- la figure 3 est une vue en coupe selon le plan A-A de la capsule représentée sur la figure 2,
- la figure 4 est une vue en coupe selon le plan B-B de la capsule représentée sur la figure 2.

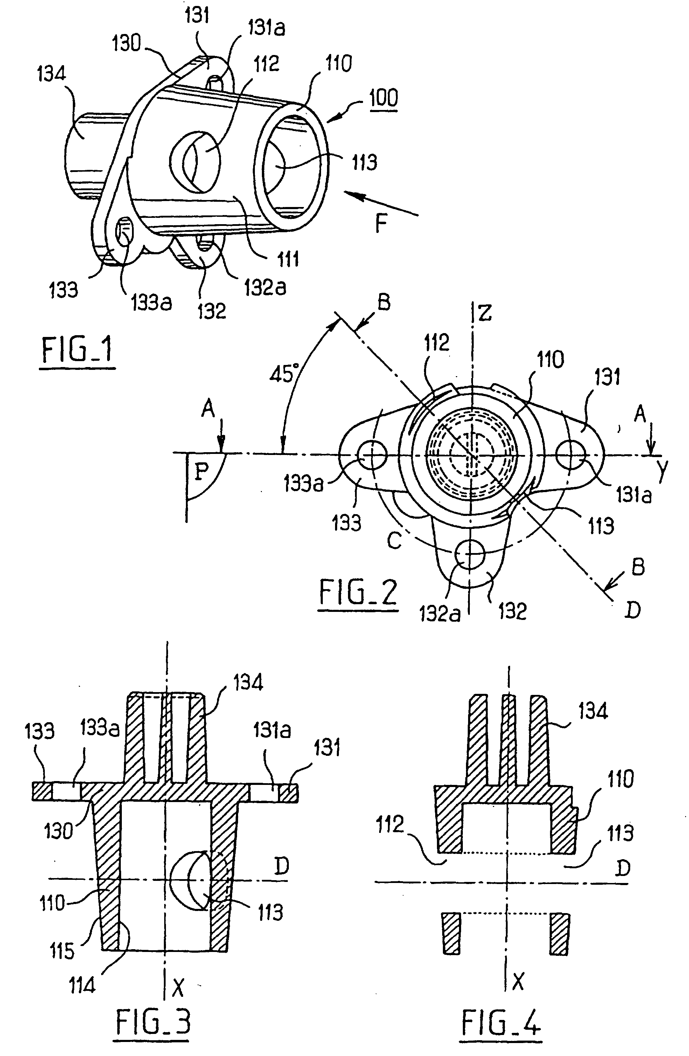

Sur les figures 1 à 4, on a représenté une capsule 100 pour le montage de l'extrémité d'une tige sur l'arrière d'un miroir de projecteur de véhicule automobile.

Cette capsule 100 comprend un fourreau 110 qui s'étend selon un axe X et qui comprend une surface interne 114 et une surface externe 115 légèrement coniques. La surface interne 114 définit intérieurement un logement central dans lequel est destinée à être engagée selon l'axe X l'extrémité de la tige ici non représentée.

Selon le mode de réalisation représenté sur les figures, le fourreau 110 est porté par une collerette 130 permettant la solidarisation du fourreau 110 avec l'arrière du miroir de projecteur ici non représenté. Cette collerette 130 définit trois pattes de fixation 131, 132, 133. Comme le montre plus particulièrement la figure 2, les pattes de fixation 131, 132, 133 s'étendent dans un plan P perpendiculaire à l'axe X du fourreau 110. Les deux pattes de fixation 131, 133 s'étendent dans des sens opposés suivant l'axe Y horizontal et la patte de fixation 132 s'étend selon l'axe Z vertical, lesdites axes Y, Z orthogonaux définissant ledit plan P. Chaque patte de fixation 131, 132, 133 est pourvue d'un perçage 13 la, 132a, 133a pour la mise en place d'un élément de fixation (non représenté) sur la partie arrière du miroir. Les centres des perçages 131a, 132a, 133a sont situés sur un cercle C entourant le fourreau 110.

Sur la face arrière de la collerette 130, face opposée à celle portant le fourreau 110, il est prévu un pion de centrage 134 s'étendant selon l'axe X et destiné à être engagé dans un logement prévu sur la face arrière du miroir. Ce pion 134 comporte des évidements axiaux lui conférant une certaine élasticité pour sa mise en place dans le logement à l'arrière du miroir.

Le fourreau 110, la collerette 130 et le pion 134 forment une seule pièce monobloc réalisée par moulage par injection d'une matière plastique telle que par exemple le polyamide éventuellement chargé à 30 % de fibres de verre, en utilisant un moule à double tiroirs.

Bien entendu, selon une variante non représentée, on peut prévoir que le fourreau vienne de formation avec le miroir.

Par ailleurs, la capsule 100 comporte un manchon en matière souple et compressible (ici non représenté) destiné à être engagé à l'intérieur du fourreau 110 et apte à recevoir axialement ladite extrémité de la tige, celle-ci comprimant alors le matériau du manchon entre elle et ledit fourreau.

Plus particulièrement, le manchon en matière souple et compressible présente une forme cylindrique de révolution autour de l'axe X de diamètre externe libre légèrement supérieur au diamètre intérieur du fourreau 110 de manière à être engagée à force à l'intérieur dudit fourreau 110. Une fois engagée à l'intérieur dudit fourreau 110, la face externe du manchon est plaquée contre la surface intérieure 114 du fourreau 110.

Comme on peut le voir sur les figures, le fourreau 110 comporte dans sa paroi latérale 111 deux ouvertures circulaires 112, 113 traversant ladite paroi latérale 111. Ces ouvertures circulaires 112, 113 sont positionnées en regard l'une de l'autre et présentent un axe commun D qui s'étend dans le plan P perpendiculaire à l'axe X du fourreau 110, en formant un angle d'environ 45 degré avec les axes orthogonaux Y horizontal, Z vertical définissant ledit plan P (voir plus particulièrement la figure 2). Ces ouvertures circulaires 112, 113 constituent des dégagements dans lequel le matériau du manchon s'engage lorsque celui-ci est comprimé par l'extrémité de la tige afin d'assurer la retenue de ladite extrémité.

Les ouvertures circulaires 112, 113 permettent alors un positionnement univoque et déterminé de l'extrémité de la tige à l'intérieur de la capsule 100.

Le manchon souple et compressible permet avantageusement d'atténuer la transmission des vibrations du boîtier au miroir.

A cet effet, il est réalisé dans un matériau du type caoutchouc, élastomère, ou mousse.

Préférentiellement, le matériau du manchon présente un coefficient d'amortissement choisi de manière à réduire au maximum l'amplitude des vibrations transmises aux fréquences de résonance, dangereuses pour le miroir.

En outre, il comporte de manière avantageuse une résistance à la déchirure suffisamment élevée pour éviter une éventuelle déchirure du manchon dans le fourreau suite aux efforts de vibrations induits par la vibration de l'extrémité de la tige dans celui-ci.

Il est intéressant de préciser qu'avantageusement, l'axe D des ouvertures circulaires 112, 113, orienté à 45 degré par rapport aux axes orthogonaux Y, Z définissant le plan P, définir une direction de résistance mécanique optimum de la capsule aux vibrations de l'extrémité de la tige se propageant suivant les directions Y et Z.

En effet, il est démontré que si une ouverture circulaire ou un dégagement est situé selon la direction Z, au cours des tests de vibrations, la résistance mécanique de la capsule ainsi constituée, sera très bonne si la vibration se propage selon la direction Y perpendiculaire à l'axe Z, et très mauvaise si la vibration se propage suivant l'axe Z. De même, si l'ouverture circulaire ou le dégagement se situe sur l'axe Y, la résistance mécanique de la capsule sera très bonne si la vibration se propage suivant l'axe Z perpendiculaire et très mauvaise si la vibration se propage selon l'axe Y. La position optimum des ouvertures circulaires ou dégagement en ce qui concerne la résistance de la capsule aux vibrations de la tige suivant les axes orthogonaux Y et Z est alors une direction qui s'étend selon un angle d'environ 45 degré par rapport aux deux axes orthogonaux Y et Z.

## Revendications

1. Capsule (100) pour le montage de l'extrémité d'une tige sur l'arrière d'un miroir de projecteur de véhicule automobile, comprenant un fourreau (110) solidaire du miroir dans lequel est engagé un manchon en matière souple et compressible apte à recevoir axialement ladite extrémité de la tige, celle-ci comprimant le matériau du manchon entre elle et ledit fourreau (110), **caractérisée en ce qu'**il est prévu dans la paroi latérale (111) du fourreau (110) au moins un dégagement (112) dans lequel le matériau du manchon s'engage lorsque celui-ci est comprimé par l'extrémité de la tige afin d'assurer la retenue de ladite extrémité.

2. Capsule (100) selon la revendication 1, **caractérisée en ce qu'**il est prévu deux dégagements (112, 113) positionnés en regard l'un de l'autre.

3. Capsule (100) selon l'une des revendications 1 ou 2, **caractérisée en ce que** chaque dégagement (112, 113) est orienté selon un axe D qui s'étend dans un plan perpendiculaire P à l'axe X du fourreau (110) en formant un angle d'environ 45 degré avec les axes orthogonaux Y, Z définissant ledit plan P.

4. Capsule (100) selon l'une quelconque des revendications 1 à 3, **caractérisée en ce que** chaque dégagement consiste en une ouverture circulaire (112, 113) d'axe D, formée dans la paroi latérale (111) du fourreau.

5. Capsule (100) selon la revendication 4, **caractérisée en ce qu'**il est prévu dans la paroi latérale (111) du fourreau (110) deux ouvertures circulaires (112, 113) placées en regard l'une de l'autre, ayant un axe commun D qui s'étend dans un plan perpendiculaire P à l'axe X du fourreau (110) en formant un angle d'environ 45 degré avec les axes orthogonaux Y, Z définissant ledit plan P.

6. Capsule (100) selon l'une quelconque des revendications 1 à 5, **caractérisée en ce que** le manchon est réalisé en un matériau du type caoutchouc, élastomère ou mousse.

7. Capsule (100) selon l'une quelconque des revendications 1 à 6, **caractérisée en ce que** le fourreau (110) comporte une surface interne (114) et une surface externe (115) légèrement coniques.

8. Capsule (100) selon l'une quelconque des revendications 1 à 7, **caractérisée en ce que** le manchon présente une forme cylindrique de révolution autour de l'axe X et de diamètre externe libre légèrement supérieur au diamètre intérieur du fourreau (110) de sorte qu'il est engagé à force à l'intérieur dudit fourreau (110).

9. Capsule (100) selon l'une quelconque des revendications 1 à 8, **caractérisée en ce que** ledit fourreau (110) est porté par une collerette (130) définissant des pattes de fixation (131, 132, 133) pourvues de perçages (131a, 132a, 133a) pour le montage de la capsule (100) sur l'arrière du miroir.

10. Capsule (100) selon la revendication 9, **caractérisée en ce que** le fourreau (110) et ladite collerette associée sont réalisés en une seule pièce par moulage d'une matière plastique telle que le polyamide.

11. Capsule (100) selon l'une quelconque des revendications 1 à 8, **caractérisée en ce que** le fourreau (110) vient de formation avec le miroir.

12. Projecteur de véhicule automobile, du type comportant un miroir portant une lampe et monté sur une pluralité de tiges elles-mêmes montées sur un boîtier du projecteur, **caractérisé en ce qu'**il est prévu des capsules selon l'une quelconque des revendications 1 à 11 solidaires de la partie arrière du miroir pour son montage sur les extrémités respectives desdites tiges.

## Patentansprüche

1. Kapsel (100) zur Montage des Endstücks einer Stange an der Rückseite eines Reflektors eines Kraftfahrzeugscheinwerfers, die eine mit dem Reflektor fest verbundene Hülse (110) umfaßt, in die eine Muffe aus elastischem, komprimierbarem Material eingeführt ist, welche das Endstück der Stange axial aufzunehmen vermag, wobei das Material der Muffe von dem Endstück zwischen diesem und der Hülse (110) zusammengedrückt wird,
**dadurch gekennzeichnet, daß** in der Seitenwand (111) der Hülse (110) wenigstens ein Freiraum (112) vorgesehen ist, in den das Material der Muffe eingreift, wenn dieses durch das Endstück der Stange zusammengedrückt wird, um den Halt dieses Endstücks sicherzustellen.

2. Kapsel (100) nach Anspruch 1,
**dadurch gekennzeichnet, daß** zwei Freiräume (112, 113) vorgesehen sind, die einander gegenüberliegend angeordnet sind.

3. Kapsel (100) nach einem der Ansprüche 1 oder 2,
**dadurch gekennzeichnet, daß** jeder Freiraum (112, 113) gemäß einer Achse D ausgerichtet ist, die sich in einer quer zur Achse X der Hülse (110) verlaufenden Ebene P erstreckt und mit den diese Ebene P festlegenden orthogonalen Achsen Y, Z einen Winkel von etwa 45 Grad bildet.

4. Kapsel (100) nach einem der Ansprüche 1 bis 3,
**dadurch gekennzeichnet, daß** jeder Freiraum aus einer kreisrunden Öffnung (112, 113) mit einer Achse D besteht, die in der Seitenwand (111) der Hülse ausgebildet ist.

5. Kapsel (100) nach Anspruch 4,
**dadurch gekennzeichnet, daß** in der Seitenwand (111) der Hülse (110) zwei kreisrunde, sich gegenüberliegende Öffnungen (112, 113) vorgesehen sind, die eine gemeinsame Achse D aufweisen, welche sich in einer zur Achse X der Hülse (110) querverlaufenden Ebene P erstreckt und mit den diese Ebene P festlegenden orthogonalen Achsen Y, Z einen Winkel von etwa 45 Grad bildet.

6. Kapsel (100) nach einem der Ansprüche 1 bis 5,
**dadurch gekennzeichnet, daß** die Muffe aus einem Material in der Art von Gummi, Elastomer oder Schaumstoff ausgeführt ist.

7. Kapsel (100) nach einem der Ansprüche 1 bis 6,
**dadurch gekennzeichnet, daß** die Hülse (110) eine leicht konische Innenfläche (114) und Außenfläche (115) aufweist.

8. Kapsel (100) nach einem der Ansprüche 1 bis 7,
**dadurch gekennzeichnet, daß** die Muffe eine zylindrische Rotationsform um die Achse X und einen freien äußeren Durchmesser aufweist, der etwas größer als der innere Durchmesser der Hülse (110) ist, so daß sie unter Kraftaufwand ins Innere der Hülse (110) eingesteckt wird.

9. Kapsel (100) nach einem der Ansprüche 1 bis 8,
**dadurch gekennzeichnet, daß** diese Hülse (110) von einem Kragen (130) getragen wird, der Befestigungsklammern (131, 132, 133) bildet, welche mit Bohrungen (131a, 132a, 133a) zur Montage der Kapsel (100) an der Rückseite des Reflektors versehen sind.

10. Kapsel (100) nach Anspruch 9,
**dadurch gekennzeichnet, daß** die Hülse (110) und der zugehörige Kragen einstückig durch Ausformung eines Kunststoffs, wie zum Beispiel Polyamid, ausgeführt sind.

11. Kapsel (100) nach einem der Ansprüche 1 bis 8,
**dadurch gekennzeichnet, daß** die Hülse (110) an dem Reflektor angeformt ist.

12. Kraftfahrzeugscheinwerfer mit einem Reflektor, der eine Lampe trägt und an mehreren Stangen befestigt ist, die ihrerseits an ein Gehäuse des Scheinwerfers montiert sind,
**dadurch gekennzeichnet, daß** Kapseln nach einem der Ansprüche 1 bis 11 vorgesehen sind, welche mit dem rückwärtigen Teil des Reflektors zu dessen Montage an den jeweiligen Endstücken der Stangen fest verbunden sind.

## Claims

1. Capsule (100) for mounting the end of a rod on the rear of a vehicle headlamp mirror, comprising a sheath (110) fixed to the mirror into which a sleeve of flexible and compressible material engages, suitable for axially receiving said end of the rod, the latter compressing the material of the sleeve between it and said sheath (110), **characterised in that** at least one exit (112) is provided in the side wall (111) of the sheath (110), into which the material of the sleeve engages when the latter is compressed by the end of the rod in order to ensure said end is retained.

2. Capsule (100) according to claim I, **characterised in that** two exits (112, 113) positioned opposite each other are provided.

3. Capsule (100) according to one of claims 1 or 2, **characterised in that** each exit (112, 113) is orientated along an axis D which extends on a perpendicular plane P to axis X of the sheath (110), forming an angle of about 45 degrees with the orthogonal axes Y, Z defining said plane P.

4. Capsule (100) according to any one of claims 1 to 3, **characterised in that** each exit consists of a circular opening (112, 113) along axis D, formed in the side wall (111) of the sheath.

5. Capsule (100) according to claim 4, **characterised in that** two circular openings (112, 113) placed opposite each other are provided in the side wall (111) of the sheath (110), having a common axis D which extends on a perpendicular plane P to axis X of the sheath (110), forming an angle of about 45 degrees with the orthogonal axes Y, Z defining said plane P.

6. Capsule (100) according to any one of claims 1 to 5, **characterised in that** the sleeve is made from a rubber, elastomer or foam type material.

7. Capsule (100) according to any one of claims 1 to 6, **characterised in that** the sheath (110) comprises an internal surface (114) and an external surface (115) which are slightly tapered.

8. Capsule (100) according to any one of the claims 1 to 7, **characterised in that** the sleeve presents a cylindrical form of revolution around axis X with its clear external diameter slightly greater than the interior diameter of the sheath (110) so that it is engaged by force inside the said sheath (110).

9. Capsule (100) according to any one of the claims 1 to 8, **characterised in that** said sheath (110) is supported by a collar (130) defining fixing lugs (131, 132, 133) provided with holes (131a, 132a, 133a) to mount the capsule (100) on the rear of the mirror.

10. Capsule (100) according to claim 9, **characterised in that** the sheath (110) and said associated collar are made from a single moulded piece of plastic material such as polyamide.

11. Capsule (100) according to any one of the claims 1 to 8, **characterised in that** the sheath (110) made integral with the mirror.

12. Vehicle headlamp, of the type comprising a mirror bearing a bulb and mounted on a number of rods themselves mounted on a casing of the headlamp, **characterised in that** the capsules according to any one of claims 1 to 11 solid with the rear section of the mirror are provided so that it can be mounted on the respective ends of said rods.
